# EUROPÄISCHE PATENTSCHRIFT

(11) **EP 0 564 884 B1**
(45) Veröffentlichungstag und Bekanntmachung des Hinweises auf die Patenterteilung: **24.04.1996**
(21) Anmeldenummer: 93104659.3
(22) Anmeldetag: 22.03.1993
(51) Int. Cl.: B29C 47/40

(54) **Mehrwellige Schneckenmaschine mit Zahnradpumpe**
Machine with several screw shafts with gearing pump
Machine avec plusieurs arbres à vis avec pompe d'engrenage

(30) Priorität: 03.04.1992 DE 4211149
(43) Veröffentlichungstag der Anmeldung: 13.10.1993
(73) Patentinhaber: BAYER AG, D-51368 Leverkusen (DE)
(72) Erfinder: Kohlgrüber, Klemens, Dr., W-5067 Kürten (DE); Holdenried, Günter, W-4018 Langenfeld (DE)

(56) Entgegenhaltungen:
- US-A- 3 553 777

## Beschreibung

Die Erfindung betrifft eine Gleichdrall-Schneckenmaschine für die chemische Verfahrenstechnik, wobei die Schneckenwellen mit verschiedenen Elementen bzw. Schneckenbesätzen bestückt werden können. Ein typischer kompletter Schneckenwellenbesatz besteht zum Beispiel aus den üblichen schraubenförmig fördernden Gewindeelementen, Exzenterscheiben zum Mischen und Kneten sowie linksgängigen Gewindeabschnitten oder Stauscheiben. Schneckenelemente bzw. - besätze sind z.B. beschrieben in H. Herrmann, "Schneckenmaschinen in der Verfahrenstechnik", Springer-Verlag 1972. Ein Extruder auf der Basis von Gegendrallschnecken ist ferner in US-A-3 553 777 beschrieben. Dabei sind zu beiden Seiten einer Zahnradpumpe Gegendrallschnecken-Förderelemente angeordnet. Das zu extrudierende Material wird bei dieser Extruderanordnung von zwei entgegengesetzten Seiten in die Zahnradpumpe gefördert, die das thermoplastische Material durch eine Austragsöffnung extrudiert. Der Materialfluß erfolgt also durch die Gegendrallschnecken zur Zahnradpumpe und von der Zahnradpumpe in den Austrag. Die mit den Schneckenwellen verbundenen Zahnradelemente sind daher Bestandteile einer Zahnrad-Austragspumpe. Die Abdichtung zu den Schneckenwellen hin erfolgt dabei mittels stirnseitiger Abdichtungsplatten mit einem zum Schneckenraum hin offenen Produktdurchtrittsfenster.

Die Erfindung geht von der Zielsetzung aus, förderaktive Druckaufbau-Abschnitte in eine Gleichdrall-Schneckenmaschine zu integrieren.

Die bekannten schraubenförmigen förderaktiven Elemente haben bei Gleichdrallschnecken nur einen relativ schlechten Pumpwirkungsgrad. Ein hoher Produktdruck kann daher - wenn überhaupt - nur mit einem förderaktiven schraubenförmigen Besatz aufgebaut werden, der eine ziemlich große Länge aufweist. Hohe Produktdrücke können daher nur mit großen Verfahrenslängen erreicht werden. Bei vielen Hochdruckprozessen in Schneckenmaschinen würde sich aber eine Verkürzung der Verfahrenslänge vorteilhaft auswirken. Hier setzt die Erfindung an.

Es lag die Aufgabe zugrunde, eine Schneckenmaschine mit einem förderaktiven Besatz zu entwickeln, der die Erzeugung hoher Produktdrücke bei einer möglichst kurzen Verfahrenslänge ermöglicht.

Diese Aufgabe wird erfindungsgemäß dadurch gelöst,
a) daß die Schneckenmaschine einen Druckaufbau-Abschnitt aufweist, der aus zwei miteinander im Eingriff befindlichen, auf die Schneckenwellen aufsteckbaren Zahnrädern besteht, wobei ein Zahnrad formschlüssig mit der dazugehörigen Schneckenwelle verbunden ist, während das andere Zahnrad frei drehbar auf der anderen Schneckenwelle gelagert ist;
b) daß die Zahnräder an ihren Längs- und Stirnseiten von einem innerhalb des Schneckengehäuses angeordneten Zahnradgehäuse mit stirnseitigen Abdichtungsplatten umschlossen sind und
c) daß die beiden stirnseitigen Abdichtungsplatten des Zahnradgehäuses je ein zum Schneckenraum hin offenes Produkt-Druchtrittsfenster aufweisen.

Gemäß einer bevorzugten Ausführungsform kann der Längsteil des Zahnradgehäuses auch durch den gegenüber den Zahnflanken liegenden Teilabschnitt des Schneckenge*häuses* gebildet werden; d.h. die Zahnflanken müssen nicht notwendigerweise durch ein separates Gehäuse abgeschlossen werden.

Die stirnseitigen Teile des Zahnradgehäuses (Abdichtungsplatten) besitzen eine dem Schneckenraum angepaßte achtförmige Kontur. Sie können einteilig oder zweiteilig ausgeführt werden.

Der Grundgedanke der Erfindung besteht darin, daß der Druckaufbau durch eine Zahnradpumpe erfolgt, die in die Schneckenmaschine integriert ist. Die Zahnradelemente können dabei wie ein normaler Schneckenbesatz auf die Schneckenwellen aufgesteckt werden, so daß die Zahnradpumpe an jeder beliebigen Stelle der Schneckenlängsachse angebracht werden kann. Darüber hinaus werden folgende weitere Vorteile mit der Erfindung erzielt:
- Da die Zahnradelemente im Gegensatz zu üblichen förderaktiven Gleichdrallschnecken-Elementen bis auf geringe Spiele abgeschlossene Volumina aufweisen, wird ein wesentlich höherer Pumpwirkungsgrad erzielt. Je nach Ausführung der erforderlichen Laufspiele kann man einen auf die Schneckenlängeneinheit bezogenen Druckaufbau erreichen, der um den Faktor 10 bis 1 000 über den konventionellen Druckaufbauabschnitten liegt.
- Der Einbau der Zahnradelemente einschließlich der dazugehörigen Gehäuseteile ist relativ einfach und problemlos; die Teile werden wie ein üblicher Schneckenbesatz lediglich auf die Schneckenwellen aufgesteckt. Auch ein nachträglicher Einbau in vorhandene Schneckenmaschinen ist ohne weiteres möglich, da keine kostspieligen Umrüstungen an der Schneckenmaschine erforderlich sind.
- Aufgrund des hohen Druckaufbaus bei sehr kurzer Verfahrenslänge können in der Schneckenmaschine chemische Reaktionen durchgeführt werden, die einen sehr hohen Druck erfordern.
- Bei der Extrusion von Kunststoffen war bisher eine der Schneckenmaschine nachgeschaltete Zahnradpumpe mit eigenem Antrieb und zusätzlicher Regelung erforderlich. Durch die erfindungsgemäße integrierte Zahnradpumpe ergibt sich eine wesentliche Vereinfachung und damit eine erhebliche Kostenreduzierung.
- Aufgrund des erheblich verbesserten Pumpwirkungsgrades wird die Gefahr der Produktschädigung aufgrund langer Verweilzeiten reduziert.

Im folgenden wird ein Ausführungsbeispiel der Erfindung anhand von Zeichnungen näher erläutert. Es zeigen:
- Fig. 1: eine Zweiwellenschnecke mit verschiedenen Besätzen und einer integrierten Zahnradpumpe,
- Fig. 2: einen Ausschnitt der Schneckenmaschine mit eingebauten Zahnradelementen in Draufsicht (senkrecht zu den Schneckenwellen) und
- Fig. 3: eine Frontansicht der Zahnradelemente (in Achsenrichtung).

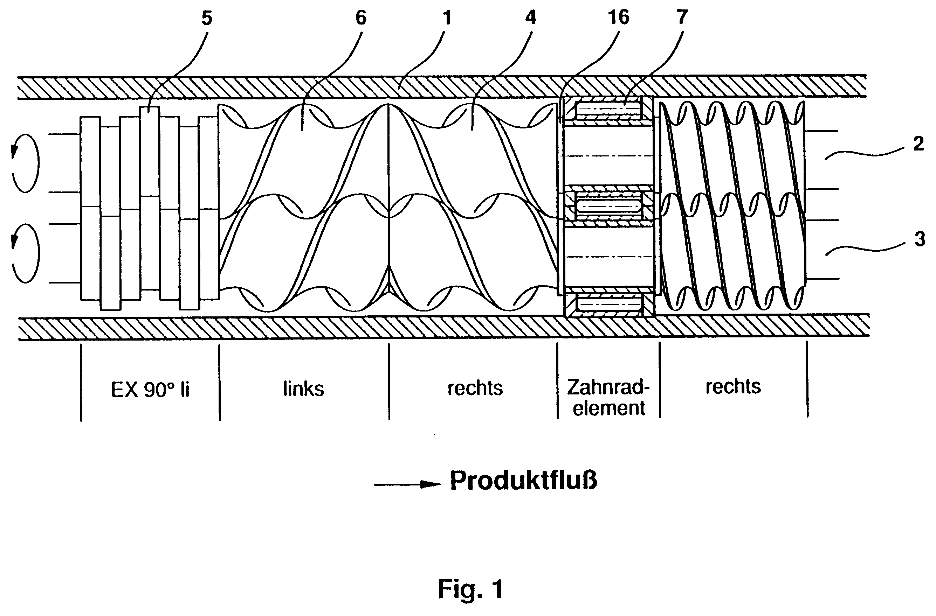

Bei der schematisch dargestellten Zweiwellenschneckenmaschine gemäß Fig. 1 sind nur das Gehäuse 1 und die Schneckenwellen 2 und 3 mit verschiedenen Besätzen gezeigt. Ein konventioneller Schneckenbesatz kann z.B. aus normal fördernden Gewindeelementen 4, Exzenterscheiben 5 und gegenläufigen Gewindeelementen 6 bestehen. Hinzu kommt die neue, aus dem Zahnradelement 7 bestehende Druckaufbaustrecke. Die Besätze werden nacheinander auf die Schneckenwellen 2, 3 aufgesteckt und sind aufgrund einer Nut/Feder-Arretierung formschlüssig mit diesen verbunden; d.h. die konventionellen Elemente drehen sich mit den Schneckenwellen mit. Bei dieser Gleichdrallschnecke ist nur ein Zahnradelement formschlüssig mit der zugehörigen Schneckenwelle verbunden sein, während das andere Zahnrad frei drehbar auf der anderen Schneckenwelle gelagert ist.

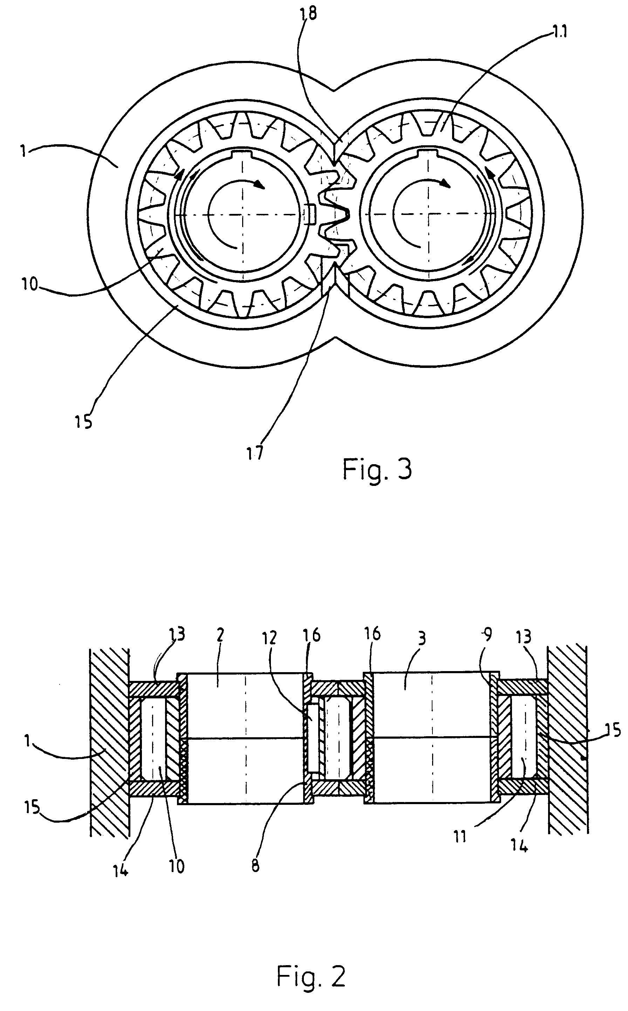

Die Wirkungsweise der neuen, integrierten Zahnradpumpe und die konstruktive Ausführung und Lagerung der Zahnradelemente werden nachfolgend anhand der Fig. 2 und 3 erläutert. Dabei wird angenommen, daß sich die Wellen 2 und 3 gleichsinnig drehen (Gleichdrallschnecke). Auf die Wellen 2 und 3 sind Distanzhülsen 8 und 9 aufgesteckt, die mittels einer formschlüssigen Verbindung mit den Wellen 2 und 3 montiert sind. Beide Distanzhülsen drehen sich also mit den Wellen mit. Auf die Distanz-hülsen 8 und 9 sind die Zahnräder 10 und 11 mit geringem Spiel geschoben. Dabei ist ein Zahnrad, z.B. das Zahnrad 10, mit der Distanzhülse 8 über eine Paßfeder 12 formschlüssig verbunden, während sich das gegenüberliegende Zahnrad 11 auf der Distanzhülse 9 frei drehen kann. Diese konstruktive Maßnahme ist erforderlich, da das Zahnrad 11 vom Zahnrad 10 entgegen dem Drehsinn der Welle 3 angetrieben wird. Die Lagerung des Zahnrads 11 kann als Gleitlager ausgeführt werden oder auch als Nadellager mit eigener Schmierung.

Damit die Zahnräder 10 und 11 einen Produktdruck erzeugen können, werden sie an ihren Stirnseiten mit achtförmigen Scheiben 13 und 14 abgedichtet. Der Durchmesser der Zahnräder 10 und 11 kann kleiner sein als der Innendurchmesser des Schneckengehäuses 1. Die Kopfkreise der Zahnräder 10 und 11 werden dann durch ein die Zahnräder in axialer Richtung umschließendes Gehäuseteil 15 abgedichtet. Die stirnseitige Dichtplatte 14 und der längsseitige Gehäuseteil 15 können auch zu einem Bauteil integriert werden. Wird dagegen der Durchmesser der Zahnräder 10 und 11 so groß gewählt, daß - bis auf das notwendige Spiel - der Innenquerschnitt des Schneckengehäuses 1 ausgefüllt wird, so kann der längsseitige Teil 15 des Zahnradgehäuses entfallen. Es verbleiben dann lediglich die dem Schneckenraum angepaßten achtförmigen, stirnseitigen Abdichtungsscheiben 13 und 14. Die achtförmigen Abdichtungsscheiben 13 und 14 können, wie in Fig. 2 angedeutet, auch jeweils aus zwei Einzelteilen bestehen, die z.B. mit Hilfe von Stiften gegeneinander fixiert werden.

Dadurch wird auch die Montage erleichtert. Damit sich die Zahnräder in jedem Fall frei drehen können, sollte ein gewisser Mindestabstand zum nächstfolgenden Besatzelement garantiert sein. Dieses Axialspiel der Zahnräder 10 und 11 kann mit Hilfe von zusätzlichen dünnen, axialen Distanzhülsen 16 realisiert werden, die auf den etwas verlängerten, radialen Distanzhülsen 8 und 9 sitzen. (In Fig. 2 zu einem Bauteil integriert, in Fig. 1 als separate Distanzhülse ausgeführt). Der Außendurchmesser der axialen Distanzhülsen 16 ist dabei zweckmäßig kleiner oder gleich dem halben Achsabstand der Wellen 2 und 3.

Wie in Fig. 3 gezeigt, erfolgt der Produkteintritt in das Zahnradelement 7 (Fig. 1) durch ein Produkt-Eintrittsfenster 17 unterhalb der Mittelebene im Zwickelbereich der Zahnräder. Das eingetragene Produkt wird durch die Zahnräder 10 und 11 nach oben gefördert und verläßt die Zahnradpumpe 7 durch ein rückseitiges Austrittsfenster 18 oberhalb der Mittelebene. Die Fenster 17 und 18 sind z.B. in der Weise ausgeführt, daß das längsseitige Zahnradgehäuse 15 im Zwickelbereich etwas geöffnet wird (z.B. über 1/4 der axialen Länge).

## Patentansprüche

1. Gleichdrall-Schneckenmaschine für die chemische Verfahrenstechnik mit schraubenförmigen Schneckenabschnitten (4) zur Produktförderung und gegebenenfalls weiteren Schneckenbesätzen (5, 6) zum Kneten oder Mischen eines hochviskosen Produktes, dadurch gekennzeichnet,
a) daß die Schneckenmaschine einen Druckaufbau-Abschnitt aufweist, der aus zwei miteinander im Eingriff befindlichen, auf die Schneckenwellen (2, 3) aufsteckbaren Zahnrädern (10, 11) besteht, wobei ein Zahnrad (10) formschlüssig mit der dazugehörigen Schneckenwelle (2) verbunden ist, während das andere Zahnrad (11) frei drehbar auf der anderen Schneckenwelle (3) gelagert ist;
b) daß die Zahnräder (10, 11) an ihren Längs- und Stirnseiten von einem innerhalb des Schneckengehäuses angeordneten Zahnradgehäuse (13, 14, 15) mit stirnseitigen Abdichtungsplatten (13, 14) umschlossen sind und
c) daß die beiden stirnseitigen Abdichtungsplatten (13, 14) des Zahnradgehäuses je ein zum Schneckenraum hin offenes Produkt-Druchtrittsfenster (17, 18) aufweisen.

2. Gleichdrall-Schneckenmaschine nach Anspruch 1, dadurch gekennzeichnet, daß der Längsteil (15) des Zahnradgehäuses durch den gegenüber den Zahnflanken liegenden Teilabschnitt des Schneckengehäuses (1) gebildet wird.

3. Gleichdrall-Schneckenmaschine nach Ansprüchen 1 bis 2, dadurch gekennzeichnet, daß die stirnseitigen Abdichtungsplatten (13, 14) eine dem Schneckenraum angepaßte, achtförmige Kontur haben.

## Claims

1. A co-rotational screw machine for chemical processing with helical screw sections (4) for product conveyance and optionally further screw attachments (5, 6) for kneading or mixing a highly viscous product, characterised in that
a) the screw machine comprises a pressure build-up section formed by two gears (10, 11), which engage with one another and can be positioned on the screw shafts (2, 3), one gear (10) being connected in a positive-locking manner to the associated screw shaft (2), whilst the other gear (11) is mounted on the other screw shaft (3) so as to be freely rotatable;
b) the gears (10, 11) are enclosed on their longitudinal sides and end faces by a gear housing (13, 14, 15), which is arranged within the screw housing and comprises end-face sealing plates (13, 14), and
c) the two end-face sealing plates (13, 14) of the gear housing each comprise a product window (17, 18) which is open towards the screw chamber.

2. A co-rotational screw machine according to claim 1, characterised in that the longitudinal section (15) of the gear housing is formed by the partial section of the screw housing (1) lying opposite the tooth flanks.

3. A co-rotational screw machine according to claims 1 to 2, characterised in that the end-face sealing plates (13, 14) have an octagonal contour matching the screw chamber.

## Revendications

1. Machine à vis sans fin à pas égal pour les techniques de processus chimiques, comportant des tronçons de vis hélicoïdaux (4) pour le transport d'un produit, et le cas échéant d'autres garnitures de vis (5, 6) pour pétrir ou mélanger un produit fortement visqueux, caractérisée en ce que :
a) la machine à vis sans fin présente un tronçon d'établissement de pression qui est constitué par deux roues dentées (10, 11) en engrènement l'une avec l'autre et pouvant être enfilées sur les arbres à vis (2, 3), une roue dentée (10) étant reliée en coopération de formes à l'arbre à vis associé (2), tandis que l'autre roue dentée (11) est montée en rotation libre sur l'autre arbre à vis (3) ;
b) les roues dentées (10, 11) sont entourées sur leurs côtés longitudinaux et frontaux par un boîtier d'engrenage (13, 14, 15) agencé à l'intérieur du boîtier de vis et comportant du côté frontal des plaques d'étanchement (13, 14) ; et
c) les deux plaques d'étanchement (13, 14) du côté frontal du boîtier d'engrenage présentent chacune une fenêtre de passage (17, 18) pour le produit, ouverte vers la chambre de vis.

2. Machine à vis sans fin à pas égal selon la revendication 1, caractérisée en ce que la partie longitudinale (15) du boîtier d'engrenage est formée par le tronçon partiel du boîtier de vis (1), qui est situé en vis-à-vis des flancs des dents.

3. Machine à vis sans fin à pas égal selon l'une ou l'autre des revendications 1 et 2, caractérisée en ce que les plaques d'étanchement (13, 14) du côté frontal présentent un contour en forme de huit adapté à la chambre de vis.
